# EUROPÄISCHE PATENTANMELDUNG

(11) **EP 2 317 339 A1**
(43) Veröffentlichungstag der Anmeldung: **04.05.2011**
(21) Anmeldenummer: 10189419.4
(22) Anmeldetag: 29.10.2010
(51) Int. Cl.: G01S 19/07

(54) **Verfahren und Vorrichtung zur Übermittlung von Satellitennavigationsdaten**

(30) Priorität: 30.10.2009 AT 17142009
(71) Anmelder: TeleConsult Austria GmbH, 8043 Graz (AT)
(72) Erfinder: Aichhorn, Klaus, 8075 Hart bei Graz (AT); Wasle, Elmar, 8182 Puch bei Weiz (AT); Seybold, Jürgen, 83679 Sachsenkam (DE)
(74) Vertreter: Wirnsberger, Gernot

(57) **Zusammenfassung**

Die Erfindung betrifft ein Verfahren zur Übermittlung von Satellitennavigationsdaten eines globalen Satellitennavigationssystems (1) an zumindest ein Endnutzergerät (2), wobei gleichzeitig die Satellitennavigationsdaten des globalen Satellitennavigationssystems (1) sowie Daten zumindest eines geostationären Satelliten (3) an mehrere terrestrische Empfängerstationen übermittelt werden, wonach die Satellitennavigationsdaten und die Daten des geostationären Satelliten (3) von den Empfängerstationen an zumindest eine Datenverarbeitungsanlage übermittelt und Korrekturdaten für die Satellitennavigationsdaten berechnet werden, worauf die Korrekturdaten an das zumindest eine Endnutzergerät (2) übermittelt werden. Erfindungsgemäß ist vorgesehen, dass die Korrekturdaten vor Übermittlung an das zumindest eine Endnutzergerät (2) zumindest einer weiteren Datenverarbeitungsanlage (6) zugeleitet werden, worauf die Korrekturdaten decodiert und verbessert werden, indem troposphärische und optional ionosphärische Korrekturen berücksichtigt werden, wonach die verbesserten Korrekturdaten in ein von dem zumindest einen Endnutzergerät (2) lesbares Format codiert und durch eine global verfügbare Kommunikationsverbindung (7) übermittelt werden. Des Weiteren betrifft die Erfindung eine Vorrichtung (8) zur Durchführung eines derartigen Verfahrens.

## Beschreibung

Die Erfindung betrifft ein Verfahren zur Übermittlung von Satellitennavigationsdaten eines globalen Satellitennavigationssystems an zumindest ein Endnutzergerät, wobei gleichzeitig die Satellitennavigationsdaten des globalen Satellitennavigationssystems sowie Daten zumindest eines geostationären Satelliten an mehrere terrestrische Empfängerstationen übermittelt werden, wonach die Satellitennavigationsdaten und die Daten des geostationären Satelliten von den Empfängerstationen an zumindest eine Datenverarbeitungsanlage übermittelt und Korrekturdaten für die Satellitennavigationsdaten berechnet werden, worauf die Korrekturdaten an das zumindest eine Endnutzergerät übermittelt werden.

Des Weiteren betrifft die Erfindung eine Vorrichtung zur Übermittlung von Satellitennavigationsdaten an zumindest ein Endnutzergerät, umfassend ein globales Satellitennavigationssystem, zumindest einen geostationären Satelliten und mehrere terrestrische Empfängerstationen, welche gleichzeitig die Satellitennavigationsdaten des globalen Satellitennavigationssystems sowie Daten des geostationären Satelliten empfangen, sowie zumindest eine mit den Empfängerstationen in Verbindung stehende Datenverarbeitungsanlage, mit welcher Korrekturdaten für die Satellitennavigationsdaten berechenbar sind, und eine Sendestation, mit welcher mittelbar oder unmittelbar Korrekturdaten an das zumindest eine Endnutzergerät übermittelbar sind.

Globale Satellitennavigationssysteme bzw. Global Navigation Satellite Systems (GNSS) haben sich in den letzten Jahrzehnten in vielen Bereichen als nützliche und teilweise unverzichtbare Instrumente zur genauen Navigation und Positionsbestimmung etabliert, beispielsweise im Straßen- oder Schifffahrtsverkehr. Bekannte GNSS sind das USamerikanische Global Positioning System (GPS) und das russische globale Satellitennavigationssystem (GLONASS).

Satellitennavigationsdaten, die von herkömmlichen GNSS zur Verfügung gestellt werden, können durch ein Satellite-based Augmentation System (SBAS) hinsichtlich Genauigkeit verbessert werden. Mittels SBAS-Technologie können Korrektur- bzw. Augmentierungsdaten z. B. mittels Satelliten zur Verfügung gestellt werden, um die Genauigkeit von Positionsmessungen zu steigern. Zusätzlich kann die Integrität und Verfügbarkeit einer Positionsbestimmung gesteigert werden. Generell können derzeit verfügbare SBAS in drei Gebiete bzw. Dienste eingeteilt werden, nämlich das European Geostationary Navigation Overlay Service (EGNOS) für Europa, das Wide Area Augmentation System (WAAS) für Nordamerika und das Multi-function Transport Satellite Satellite-based Augmentation System (MSAS) für Japan. Durch den Einsatz von SBAS-Technologie lässt sich eine Genauigkeit in der Bestimmung einer Position von etwa 10 m bis auf etwa 1 m verbessern. Hierfür werden zusätzlich zu den GNSS-Satelliten geostationäre Satelliten eingesetzt, die wie die GNSS-Satelliten Signale bzw. Daten zu terrestrischen Empfängerstationen senden, sodass differenzielle Korrekturen bezüglich der Satellitenbahnen und -uhren sowie Laufzeitverzögerungen in der Ionosphäre berechnet sowie eine Datenintegrität ermittelt werden können. Die diesbezüglichen Korrekturdaten werden mit geostationären Satelliten an Endnutzergeräte übermittelt, die SBAS-fähig sein müssen, um die Korrekturdaten lesen zu können.

Wenngleich mit der SBAS-Technologie grundsätzlich einem Endnutzergerät Korrekturdaten für Satellitennavigationsdaten zur Verfügung gestellt werden können, ergibt sich insbesondere bei topografisch anspruchsvollem und/oder dicht verbautem Gelände das Problem, dass aufgrund von Abschottung die Korrekturdaten von einem Endnutzergerät nicht empfangen werden können. Darüber hinaus können mit den Korrekturdaten zwar grundsätzlich bessere Ergebnisse in der Positionsbestimmung erreicht werden, allerdings sind die erzielten Genauigkeiten für spezielle Anwendungen, z. B. agrarische Flächenvermessung oder automatische Fahrspurerkennung im Straßenverkehr, grundsätzlich nicht ausreichend. Verfügbarkeit und Genauigkeit von SBAS-Korrekturdaten sind somit limitiert.

Aufgabe der Erfindung ist es, ein Verfahren der eingangs genannten Art anzugeben, bei dem diese Nachteile beseitigt oder zumindest verringert sind.

Ein Ziel der Erfindung ist es, eine Vorrichtung der eingangs genannten Art anzugeben, bei der die vorstehenden Nachteile beseitigt oder zumindest verringert sind.

Die verfahrensmäßige Aufgabe wird erfindungsgemäß dadurch gelöst, dass bei einem Verfahren der eingangs genannten Art die Korrekturdaten vor Übermittlung an das zumindest eine Endnutzergerät zumindest einer weiteren Datenverarbeitungsanlage zugeleitet werden, worauf die Korrekturdaten decodiert und verbessert werden, indem troposphärische und optional ionosphärische Korrekturen berücksichtigt werden, wonach die verbesserten Korrekturdaten in ein von dem zumindest einen Endnutzergerät lesbares Format codiert und durch eine global verfügbare Kommunikationsverbindung übermittelt werden.

Ein mit der Erfindung erzielter Vorteil ist darin zu sehen, dass die Korrekturdaten durch Berücksichtigung troposphärischer und optional ionosphärischer Korrekturen eine höhere Qualität aufweisen bzw. eine Positionsbestimmung mit höherer Genauigkeit erfolgen kann. Dies erlaubt es grundsätzlich, die Korrekturdaten auch beispielsweise im Bereich der agrarischen Flächenvermessung einzusetzen, wo eine besonders hohe Genauigkeit gefordert ist. Da die verbesserten Korrekturdaten gleichzeitig nicht durch geostationäre Satelliten, sondern durch eine global verfügbare Kommunikationsverbindung an das zumindest eine Endnutzergerät übermittelt werden, ist neben der hohen Genauigkeit auch eine hohe Verfügbarkeit sichergestellt, insbesondere auch in topografisch anspruchsvollem Gebiet.

Im Rahmen der Erfindung wurde erkannt, dass konventionelle SBAS-Korrekturdaten, insbesondere EGNOS-Daten, eine brauchbare Grundlage darstellen, um zu verbesserten Korrekturdaten zu gelangen, wenn zusätzlich troposphärische und optional auch ionosphärische Korrekturen berücksichtigt werden. Das Verfahren ist daher einerseits relativ einfach und erlaubt andererseits die Nutzung bestehender Dienste. Hierfür werden beispielsweise EGNOS-Daten decodiert und dann um troposphärische und ionosphärische Korrekturen ergänzt, ehe die so erhaltenen verbesserten Korrekturdaten codiert an das zumindest eine Endnutzergerät übermittelt werden.

Aus dem Stand der Technik ist eine Anwendung von troposphärischen Korrekturen auf GPS-Signale bzw. GPS-Daten bekannt (WO 2004/095055 A1), wobei auch lokale Wetterdaten in die Korrekturen einfließen können. Im Unterschied zu einem erfindungsgemäßen Verfahren werden allerdings nicht lesbare Korrekturdaten berechnet, sondern Parameter, die ebenfalls im Unterschied zum erfindungsgemäßen Verfahren über GNSS-Satelliten an Endnutzergeräte übertragen werden. Gemäß der EP 2 003 468 A1 können Wetterdaten berücksichtigt werden, um Alarmmeldungen hinsichtlich extremer atmosphärischer Bedingungen zu generieren, die ebenfalls mit GNSS-Satelliten zur Verfügung gestellt werden. Gemäß der US 2002/0199196 A1 können Wetterdaten bei einer Positionsbestimmung berücksichtigt werden, die auf einer Integration von GPS-Pseudoranges und Pseudoranges abgeleitet aus TV-Signalen beruht.

Die erfindungsgemäß verbesserten Korrekturdaten können beispielsweise über ein globales Satelliten-Kommunikationssystem wie GLOBALSTAR oder IRIDIUM zur Verfügung gestellt bzw. übermittelt werden. Bevorzugt ist es jedoch, dass die verbesserten Korrekturdaten über eine terrestrische Kommunikationsverbindung übermittelt werden. Insbesondere für topografisch anspruchsvolle Gebiete ist es zweckmäßig, dass die verbesserten Korrekturdaten durch ein Mobilfunknetz übermittelt werden, sodass bestehende Infrastrukturen ausgenutzt werden.

Hinsichtlich des Formats der verbesserten Korrekturdaten hat es sich als günstig erwiesen, dass diese im Radio-Technical-Commission-for-Maritime-Services-Format (RTCM-Format) oder Radio-Technical-Commission-for-Aeronautics-Format (RTCA-Format) übermittelt werden, da diese Formate von gängigen Endnutzergeräten in der Regel gelesen werden können.

Von Vorteil ist es des Weiteren, wenn die troposphärischen Korrekturen mithilfe meteorologischer Parameter berechnet werden, die mit Messstationen bestimmt werden. Dadurch ist eine realitätsnahe Modellierung der troposphärischen Korrekturen möglich. Insbesondere werden mit den Messstationen diesbezüglich jeweils zumindest Druck und Temperatur sowie optional Feuchtigkeit bestimmt, um zuverlässige Ergebnisse zu erhalten. Die so erhaltenen bzw. der weiteren Datenverarbeitungsanlage zugeleiteten Parameter dienen der Berechnung lokaler Troposphärenkorrekturen, die mit globalen Modellen zur Modellierung der Troposphäre kombiniert werden können. Damit die entsprechenden Korrekturen in Bezug auf kleine lokale Bereiche möglichst genau sind, werden die meteorologischen Messstationen in einem möglichst dichten Raster, z. B. durchschnittlich 50 km mal 50 km oder weniger, angeordnet.

Um eine ungewollte Nutzung der verbesserten Korrekturdaten zu unterbinden, kann vorgesehen sein, dass die verbesserten Korrekturdaten gegen Authentifizierung zur Verfügung gestellt werden.

Die Korrekturdaten, die verbessert werden, können über einen SBAS-fähigen Empfänger eingeholt werden. Bevorzugt ist es aber, dass die der weiteren Datenverarbeitungsanlage zugeleiteten Korrekturdaten über Internet zur Verfügung gestellt werden. Insbesondere EGNOS-Daten sind über Internet abrufbar, sodass sich ein Aufwand bei der erforderlichen Einholung der zu verbessernden Korrekturdaten minimieren lässt.

Um die Qualität der zur Verfügung gestellten verbesserten Korrekturdaten weiter zu verbessern, können Daten von GNSS-Referenzstationen berücksichtigt werden.

Das weitere Ziel der Erfindung wird erreicht, wenn bei einer Vorrichtung der eingangs genannten Art zumindest eine weitere Datenverarbeitungsanlage vorgesehen ist, die mit der Sendestation und/oder der Datenverarbeitungsanlage sowie meteorologischen Messstationen mittelbar oder unmittelbar in Verbindung steht, wobei in der zumindest einen weiteren Datenverarbeitungsanlage ein oder mehrere Algorithmen gespeichert sind, mit denen die Korrekturdaten zuerst decodierbar und unter Berücksichtigung troposphärischer und optional ionosphärischer Korrekturen zu verbesserten Korrekturdaten kombinierbar und anschließend in ein von dem zumindest einem Endnutzergerät lesbares Format codierbar sind, wobei Messparameter der meteorologischen Messstationen berücksichtigt sind, und dass eine global verfügbare Kommunikationsverbindung vorgesehen ist, mit welcher die verbesserten Korrekturdaten an das zumindest eine Endnutzergerät übermittelbar sind.

Mit der erfindungsgemäßen Vorrichtung erzielte Vorteile sind insbesondere darin zu sehen, dass auf einfache Weise verbesserte Korrekturdaten für Satellitennavigationsdaten von GNSS-Satelliten zur Verfügung gestellt werden können, die eine hochgenaue Positionsbestimmung ermöglichen und zudem auch in topografisch anspruchsvollem und/oder dicht verbautem Gebiet empfangbar sind.

Bevorzugt ist vorgesehen, dass die Kommunikationsverbindung eine terrestrische Kommunikationsverbindung ist. Insbesondere kann die Kommunikationsverbindung durch ein Mobilfunknetz gebildet sein.

Die Messstationen sind bevorzugt in einem kleinen Raster angeordnet, damit auch lokal hochgenaue Korrekturdaten zur Verfügung gestellt werden können. Diesbezüglich kann insbesondere vorgesehen sein, dass die meteorologischen Messstationen in einem Raster von durchschnittlich 50 km mal 50 km oder weniger angeordnet sind.

Weitere Merkmale, Vorteile und Wirkungen der Erfindung ergeben sich aus der nachfolgenden Beschreibung eines Ausführungsbeispiels. In den Zeichnungen, auf die dabei Bezug genommen wird, zeigen:
Fig. 1 ein Blockschaltbild mit einem globalen Satellitennavigationssystem unter Einbindung von SBAS-Technologie;
Fig. 2 eine erfindungsgemäße Vorrichtung in schematischer Darstellung.

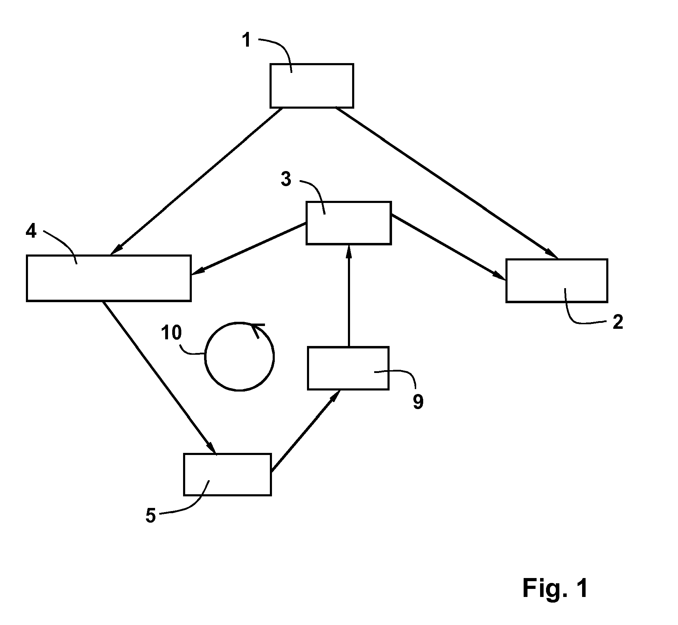

In Fig. 1 ist ein globales Satellitennavigationssystem 1 schematisch dargestellt. Das Satellitennavigationssystem 1 umfasst mehrere GNSS-Satelliten, von welchen in Fig. 1 lediglich einer schematisch dargestellt ist. Die GNSS-Satelliten übermitteln einerseits Signale bzw. Daten an zumindest ein Endnutzergerät 2, in der Regel eine Vielzahl von Endnutzergeräten, und andererseits mehrere terrestrische, ortsfeste Empfängerstationen 4, von denen in Fig. 1 ebenfalls lediglich eine dargestellt ist. Die Empfängerstationen 4 sind sogenannte Remote Integrity and Monitoring Stations (RIMS). Des Weiteren ist eine Datenverarbeitungsanlage 5 vorgesehen, die auch aus einer Vielzahl von Computern gebildet sein kann. Darüber hinaus ist ein geostationärer Satellit 3 vom Typ Inmarsat III oder ARTEMIS Bestandteil des Systems. Ferner ist eine ortsfeste Sendestation 9 vorgesehen, welche Daten der Datenverarbeitungsanlage 5 an den geostationären Satelliten 3 übermittelt.

Entsprechend der Darstellung in Fig. 1 übermitteln die GNSS-Satelliten Positionsdaten zu den Empfängerstationen 4. Die Empfängerstationen 4 leiten die Positionsdaten zur Datenverarbeitungsanlage 5 weiter, wo Korrektur- bzw. Augmentierungsdaten berechnet werden. Diese Korrektur- bzw. Augmentierungsdaten enthalten unter anderem Uhrkorrekturen für die GNSS-Satelliten, Ionosphärenkorrekturen bezüglich der GNSS-Satelliten und Daten bezüglich der Integrität der Korrekturdaten.

Die Korrektur- bzw. Augmentierungsdaten werden kombiniert und anschließend über die Sendestation 9 zum geostationären Satellit 3 versendet, welcher die Korrektur- bzw. Augmentierungsdaten dem zumindest einem Endnutzergerät 2 übermittelt, das ebenfalls Satellitennavigationsdaten von den GNSS-Satelliten empfängt. Im Endnutzergerät 2 können die Satellitennavigationsdaten der GNSS-Satelliten und die Korrekturdaten kombiniert werden, um eine Position mit erhöhter Genauigkeit zu bestimmen.

Die Korrektur- bzw. Augmentierungsdaten müssen von der Datenverarbeitungsanlage 5 mit einer bestimmten Integrität bereitgestellt werden, um einem Nutzer des Endnutzergerätes 2 eine hohe Wahrscheinlichkeit von zuverlässigen Daten zu gewährleisten. Daher muss die Datenverarbeitungsanlage 5 auch selbst alle Daten, die dieses an das Endnutzergerät 2 übermittelt, quasi in Echtzeit empfangen, um diese zu verifizieren. Die Datenverarbeitungsanlage 5 empfängt die Korrektur- bzw. Augmentierungsdaten, welche diese selbst über den geostationären Satelliten 3 sendet, über die Empfängerstationen 4 bzw. RIMS, sodass ein Datenpfad eine Integritätsschleife 10 bildet.

Das Verfahren wie vorstehend dargelegt und in Fig. 1 schematisch dargestellt wird gemäß dem Stand der Technik angewendet, um verbesserte Positionsdaten zu erzielen, z. B. im Rahmen des EGNOS-Dienstes.

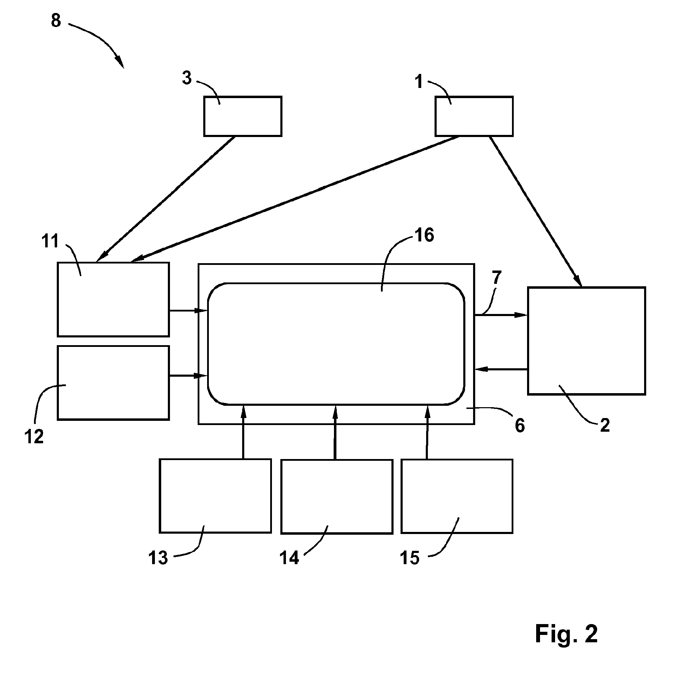

In Fig. 2 ist eine erfindungsgemäße Vorrichtung 8 schematisch dargestellt. Die Vorrichtung 8 umfasst eine Datenverarbeitungsanlage 6, die Korrektur- bzw. Augmentierungsdaten bezieht, die gemäß Fig. 1 berechnet und zur Verfügung gestellt werden. Die Korrektur- bzw. Augmentierungsdaten können durch einen Empfänger 11, z. B. einen EGNOS-fähigen Empfänger, oder über einen Datenserver 12 bezogen werden. Die Vorrichtung 8 steht des Weiteren mit einer Bezugsquelle 13 für GNSS-Messdaten von GNSS-Referenzstationen, einer Bezugsquelle 14 für meteorologische Parameter und einer Bezugsquelle 15 für präzise Satellitenbahnen in Verbindung. Anstelle der Bezugsquelle 14 für meteorologische Parameter kann die Datenverarbeitungsanlage 6 auch mit einer Vielzahl von meteorologischen Messstationen unmittelbar in Verbindung stehen. Des Weiteren ist eine Kommunikationsverbindung 7 vorgesehen, durch welche Daten der Datenverarbeitungsanlage 6 an das zumindest eine Endnutzergerät 2 übermittelt werden können. Die Kommunikationsverbindung 7 ist vorzugsweise eine terrestrische Kommunikationsverbindung und kann z. B. in Form eines Mobilfunknetzes implementiert sein. Das zumindest eine Endnutzergerät 2 empfängt darüber hinaus, wie auch in Fig. 1 dargestellt, Satellitennavigationsdaten von GNSS-Satelliten.

Die Vorrichtung 8 gemäß Fig. 2 arbeitet wie folgt: Korrektur- bzw. Augmentierungsdaten werden von der Datenverarbeitungsanlage 6 von einer Bezugsquelle für konventionelle SBAS-Korrekturdaten bzw. kurz SBAS-Daten bezogen. Hierfür kann beispielsweise bei Nutzung des EGNOS-Dienstes ein EGNOS-fähiger Empfänger 11 vorgesehen sein. Alternativ oder zusätzlich ist es auch möglich, dass die SBAS-Daten von einem Datenserver 12, z. B. über den Service Signal in Space through Internet (SiSNet), bezogen werden. Des Weiteren bezieht die Datenverarbeitungsanlage 6 aus einer Bezugsquelle 14 meteorologische Parameter zur Berechnung lokaler oder regionaler meteorologischer Korrekturen, wobei reale Messgrößen wie Druck, Temperatur und optional Feuchtigkeit aus in einem Raster angeordneten Messstationen einfließen. Ferner werden aus einer Bezugsquelle 13 Daten aus GNSS-Referenzstationen und aus einer weiteren Bezugsquelle 15 Daten für präzise Orbits bezogen. Die Daten aus den Bezugsquellen 13, 14, 15 werden mit den konventionellen SBAS-Daten verknüpft, um verbesserte Korrekturdaten zu erhalten. Hierfür werden die SBAS-Daten zuerst decodiert und anschließend, nach Berechnung der verbesserten Korrekturen, mit den SBAS-Daten verknüpft, ehe die so erhaltenen verbesserten Korrekturdaten wieder codiert werden. Hierfür ist eine Software 16 bzw. sind mehrere Softwaremodule vorgesehen. Anschließend werden die verbesserten Korrekturdaten über eine Kommunikationsverbindung 7 an zumindest ein Endnutzergerät 2 übermittelt, vorzugsweise mittels einer terrestrischen Kommunikationsverbindung. Das Endnutzergerät 2 beinhaltet einen herkömmlichen Empfänger, der für ein Differential Global Positioning System (DGPS) ausgelegt ist. Alternativ kann auch ein EGNOS-fähiger Empfänger inklusive Kommunikationsmodem zum Empfang der verbesserten Korrekturdaten eingesetzt werden. Die verbesserten Korrekturdaten werden im RTCM-Format (DGPS-fähiger Empfänger) oder RTCA-Format (EGNOS-fähiger Empfänger) übermittelt. Der jeweilige Empfänger des Endnutzergerätes 2 wendet die erhaltenen verbesserten Korrekturdaten auf die ebenfalls empfangenen Satellitennavigationsdaten an, um die absolute Genauigkeit der Positionsbestimmung zu verbessern. Diesbezüglich empfängt das Endnutzergerät 2 entweder für ein Gebiet gewisser geografischer Größe berechnete und somit gültige Korrekturdaten oder auch für seine Nährungsposition verbesserte Korrekturdaten, falls das Endnutzergerät 2 seine Nährungsposition an die Vorrichtung 8 übermittelt.

## Patentansprüche

1. Verfahren zur Übermittlung von Satellitennavigationsdaten eines globalen Satellitennavigationssystems (1) an zumindest ein Endnutzergerät (2), wobei gleichzeitig die Satellitennavigationsdaten des globalen Satellitennavigationssystems (1) sowie Daten zumindest eines geostationären Satelliten (3) an mehrere terrestrische Empfängerstationen (4) übermittelt werden, wonach die Satellitennavigationsdaten und die Daten des geostationären Satelliten (3) von den Empfängerstationen (4) an zumindest eine Datenverarbeitungsanlage (5) übermittelt und Korrekturdaten für die Satellitennavigationsdaten berechnet werden, worauf die Korrekturdaten an das zumindest eine Endnutzergerät (2) übermittelt werden, **dadurch gekennzeichnet, dass** die Korrekturdaten vor Übermittlung an das zumindest eine Endnutzergerät (2) zumindest einer weiteren Datenverarbeitungsanlage (6) zugeleitet werden, worauf die Korrekturdaten decodiert und verbessert werden, indem troposphärische und optional ionosphärische Korrekturen berücksichtigt werden, wonach die verbesserten Korrekturdaten in ein von dem zumindest einen Endnutzergerät (2) lesbares Format codiert und durch eine global verfügbare Kommunikationsverbindung (7) übermittelt werden.

2. Verfahren nach Anspruch 1, **dadurch gekennzeichnet, dass** die verbesserten Korrekturdaten über eine terrestrische Kommunikationsverbindung übermittelt werden.

3. Verfahren nach Anspruch 2, **dadurch gekennzeichnet, dass** die verbesserten Korrekturdaten durch ein Mobilfunknetz übermittelt werden.

4. Verfahren nach einem der Ansprüche 1 bis 3, **dadurch gekennzeichnet, dass** die verbesserten Korrekturdaten im RTCM-Format oder RTCA-Format übermittelt werden.

5. Verfahren nach einem der Ansprüche 1 bis 4, **dadurch gekennzeichnet, dass** die troposphärischen Korrekturen mithilfe meteorologischer Parameter berechnet werden, die mit meteorologischen Messstationen bestimmt werden.

6. Verfahren nach Anspruch 5, **dadurch gekennzeichnet, dass** mit den Messstationen jeweils zumindest Druck und Temperatur sowie optional Feuchtigkeit bestimmt werden.

7. Verfahren nach Anspruch 5 oder 6, **dadurch gekennzeichnet, dass** die Messstationen in einem Raster von durchschnittlich 50 km mal 50 km oder weniger angeordnet werden.

8. Verfahren nach einem der Ansprüche 1 bis 7, **dadurch gekennzeichnet, dass** die verbesserten Korrekturdaten gegen Authentifizierung zur Verfügung gestellt werden.

9. Verfahren nach einem der Ansprüche 1 bis 8, **dadurch gekennzeichnet, dass** die der weiteren Datenverarbeitungsanlage (6) zugeleiteten Korrekturdaten über Internet zur Verfügung gestellt werden.

10. Verfahren nach einem der Ansprüche 1 bis 9, **dadurch gekennzeichnet, dass** bei der Verbesserung der Korrekturdaten Daten von GNSS-Referenzstationen berücksichtigt werden.

11. Vorrichtung (8) zur Übermittlung von Satellitennavigationsdaten an zumindest ein Endnutzergerät (2), umfassend ein globales Satellitennavigationssystem (1), zumindest einen geostationären Satelliten (3) und mehrere terrestrische Empfängerstationen (4), welche gleichzeitig die Satellitennavigationsdaten des globalen Satellitennavigationssystems (1) sowie Daten des geostationären Satelliten (3) empfangen, sowie zumindest eine mit den Empfängerstationen (4) in Verbindung stehende Datenverarbeitungsanlage (5), mit welcher Korrekturdaten für die Satellitennavigationsdaten berechenbar sind, und eine Sendestation (9), mit welcher mittelbar oder unmittelbar Korrekturdaten an das zumindest eine Endnutzergerät (2) übermittelbar sind, **dadurch gekennzeichnet, dass** zumindest eine weitere Datenverarbeitungsanlage (6) vorgesehen ist, die mit der Sendestation (9) und/oder der Datenverarbeitungsanlage (5) sowie mit meteorologischen Messstationen mittelbar oder unmittelbar in Verbindung steht, wobei in der zumindest einen weiteren Datenverarbeitungsanlage (6) ein oder mehrere Algorithmen gespeichert sind, mit denen die Korrekturdaten zuerst decodierbar und unter Berücksichtigung troposphärischer und optional ionosphärischer Korrekturen zu verbesserten Korrekturdaten kombinierbar und anschließend in ein von dem zumindest einem Endnutzergerät (2) lesbares Format codierbar sind, wobei Messparameter der meteorologischen Messstationen berücksichtigt sind, und dass eine global verfügbare Kommunikationsverbindung (7) vorgesehen ist, mit welcher die verbesserten Korrekturdaten an das zumindest eine Endnutzergerät (2) übermittelbar sind.

12. Vorrichtung (8) nach Anspruch 11, **dadurch gekennzeichnet, dass** die Kommunikationsverbindung (7) eine terrestrische Kommunikationsverbindung ist.

13. Vorrichtung (8) nach Anspruch 12, **dadurch gekennzeichnet, dass** die Kommunikationsverbindung (7) durch ein Mobilfunknetz gebildet ist.

14. Vorrichtung (8) nach einem der Ansprüche 11 bis 13, **dadurch gekennzeichnet, dass** die meteorologischen Messstationen in einem Raster von durchschnittlich 50 km mal 50 km oder weniger angeordnet sind.

15. Verwendung von SBAS-Daten zur Berechnung verbesserter Korrekturdaten für GNSS-Satellitennavigationsdaten unter Berücksichtigung troposphärischer und optional ionosphärischer Korrekturen.
